# EUROPÄISCHE PATENTSCHRIFT

(11) **EP 2 072 970 B1**
(45) Veröffentlichungstag und Bekanntmachung des Hinweises auf die Patenterteilung: **19.01.2011**
(21) Anmeldenummer: 07024873.7
(22) Anmeldetag: 21.12.2007
(51) Int. Cl.: G01F 1/32, G01N 11/10, G01N 11/04

(54) **Verfahren zur ermittlung der viskosität einer flüssigkeit mit einem wirbelströmungsmesser**
Method for determining the viscosity of a fluid using a vortex flowmeter
Procédé destiné à la détermination de la viscosité d'un liquide avec un débitmètre à tourbillons

(43) Veröffentlichungstag der Anmeldung: 24.06.2009
(73) Patentinhaber: Grundfos Management A/S, 8850 Bjerringbro (DK)
(72) Erfinder: Verdirk, Michael, Dipl.-Ing., 66802 Felsberg (DE)
(74) Vertreter: Vollmann, Heiko

(56) Entgegenhaltungen:
- US-B1- 6 237 425
- BOUCHER R F ET AL: "LOW REYNOLDS NUMBER FLUIDIC FLOWMETERING" JOURNAL OF PHYSICS E. SCIENTIFIC INSTRUMENTS, IOP PUBLISHING, BRISTOL, GB, Bd. 21, Nr. 10, 1. Oktober 1988 (1988-10-01), Seiten 977-989, XP000070944 ISSN: 0022-3735
- C.H.K. WILLIAMSON: "Vortex dynamics in the cylinder wake" ANNUAL REVIEW FLUID MECHANICS, Bd. 28, 1996, Seiten 477-539, XP002483233 Gefunden im Internet: URL:http://arjournals.annualreviews.org> [gefunden am 2008-05-06]

## Beschreibung

Die Erfindung betrifft ein Verfahren zur Ermittlung der Viskosität einer Flüssigkeit.

Als Kármánsche Wirbelstraße bezeichnet man ein Phänomen in der Strömungsmechanik, bei dem ein Körper innerhalb einer Strömung angeordnet wird und bei dem sich in Strömungsrichtung dahinter gegenläufige Wirbel ausbilden. Wird ein solcher Körper mit niedriger Geschwindigkeit angeströmt, fließt die Strömung bei einer kleinen Reynolds-Zahl laminar. Mit zunehmender Geschwindigkeit (höhere Reynolds-Zahl) bilden sich zunächst stationäre Wirbel aus, die bei weiterer Zunahme der Strömungsgeschwindigkeit sich ablösen und eine so genannte Wirbelstraße hinter dem Körper bilden. Die Ablösefrequenz der Wirbel kann über die Strouhalzahl bestimmt werden, die von der Form des Körpers abhängig ist. Aufgrund des linearen Zusammenhangs von Ablösefrequenz und Strömungsgeschwindigkeit wird dieser physikalische Effekt für die Durchflussmessung bei nicht-abrasiven, niederviskosen Medien genutzt. Solche Messanordnungen sind als Vortex-Durchflussmesser bekannt. Aus Boucher, R. F. et al "Low Reynolds number fluidic flowmetering" Journal of Physics E/Scientific Instruments, IOP publishing, Bristol, GB, Bd. 21, Nr. 10, 1. Oktober 1988 (1988-10-01), Seiten 977-989, ISSN: 0022-3735 ist es bekannt, dieses Durchflussmessprinzip bis hin zu sehr kleinen Reynoldszahlen anzuwenden, d. h. auch bei höherviskosen Flüssigkeiten wie Öl, Abwasser und dergleichen. Ein solcher Vortex-Durchflussmesser ist beispielsweise in EP 1 434 034 A1 beschrieben. Ein solcher Vortex-Durchflussmesser wird insbesondere in Leitungssystemen von Kreisläufen eingesetzt, sei es in der Leitung selbst oder auch innerhalb der den Umlauf erzeugenden Pumpe. Eine solche Messanordnung besteht typischerweise aus einem in die Strömung hineinragenden Körper, einer so genannten Obstruktion und einem in geeigneten Abstand dahinter angeordneten Sensor, typischerweise einem Drucksensor, insbesondere einem Differenzdrucksensor. Solche Bauteile können heutzutage kostengünstig hergestellt werden und mit hoher genauer die Durchflussgeschwindigkeit bestimmen. Aus US-B-6,237,425 ist der Aufbau eines solchen Vortex-Durchflussmessers bekannt.

Bei derartigen Leitungskreisläufen, wie sie beispielsweise in Heizungen, in Solaranlagen, im Kühlwasserkreislauf eines Fahrzeugs oder dergleichen zu finden sind, reicht die Messung der Strömungsgeschwindigkeit häufig nicht aus. In modernen Systemen sind alle für den Betrieb wesentlichen Systemgrößen möglichst ständig und zuverlässig zu erfassen. Es liegt daher der vorliegenden Erfindung die Aufgabe zugrunde, mit insbesondere einer Vortex-Durchflussmesseinrichtung mit möglichst geringen Modifizierungen eine weitere für den Betrieb einer Anlage relevante Größe zu erfassen.

Diese Aufgabe wird gemäß der Erfindung durch die in Anspruch 1 aufgeführten Merkmale gelöst. Vorteilhafte Ausgestaltungen der Erfindungen sind in den Unteransprüchen, der nachfolgenden Beschreibung und Zeichnung aufgeführt.

Das erfindungsgemäße Verfahren dient zur Ermittlung der Viskosität einer Flüssigkeit. Bei dem erfindungsgemäßen Verfahren wird in einen flüssigkeitsführenden Kanal ein in den Kanal ragender und beim Anströmen wirbelerzeugender Körper angeordnet, wobei mindestens ein sich in Strömungsrichtung hinter dem Körper bildender Wirbel messtechnisch erfasst und die Strömungsgeschwindigkeit in dem Kanal ermittelt wird, bei welcher erstmals Wirbel oder gerade noch Wirbel entstehen, wobei diese dann ermittelte Strömungsgeschwindigkeit als Maß für die Viskosität der durchströmenden Flüssigkeit herangezogen wird.

Der vorrichtungsmäßige Aufbau zur Durchführung des erfindungsgemäßen Verfahrens sieht eine Messanordnung zum Eingliedern in eine Leitung vor, welche einen Körper und einen mit Abstand dazu angeordneten Druck- oder vorzugsweise Differenzdrucksensor aufweist sowie Mittel zum Verändern der Strömungsgeschwindigkeit in der Leitung und eine elektronische Steuer- und Auswerteinrichtung, mit der zum einen die Strömungsgeschwindigkeit in der Leitung gesteuert werden kann und mit der zum anderen die Auswertung des Druck- insbesondere Differenzdrucksensorsignals zur Bestimmung der Viskosität der Flüssigkeit in der Leitung erfolgt. Eine solche Messanordnung zählt zum Kalibrieren von Vortex-Messeinrichtungen grundsätzlich schon zum Stand der Technik (sieh Boucher, R. F. et al a.a.O.)

Grundgedanke der vorliegenden Erfindung ist es somit, einer Vortex-Messeinrichtung mit geringen Veränderungen einer weiteren Verwendung, nämlich der Viskositätsmessung zuzuführen. Es hat sich erstaunlicherweise gezeigt, dass in gewissen Bereichen eine deutliche Abhängigkeit zwischen der Strömungsgeschwindigkeit, bei welcher sich gerade ein Wirbel hinter dem Körper bildet oder bei abfallender Geschwindigkeit ein solcher Wirbel gerade noch besteht, ein Maß für die Viskosität der durchströmenden Flüssigkeit darstellt, so dass bei gleichzeitiger Erfassung der Geschwindigkeit unmittelbar Rückschlüsse auf die Viskosität der Flüssigkeit gezogen werden können.

Das erfindungsgemäße Verfahren kann vorteilhaft mit einer Vortex-Durchflussmesseinrichtung durchgeführt werden, beschränkt sich jedoch nicht darauf sondern kann gegebenenfalls auch mit einem aus sonstiger Quelle stammenden Signal für die Strömungsgeschwindigkeit in der Leitung verwendet werden. Besonders vorteilhaft erfolgt das erfindungsgemäße Verfahren im Zusammenhang mit einer Vortex-Messeinrichtung, bei der somit mit einer Messeinrichtung gleichzeitig Strömungsgeschwindigkeit und Viskosität des durchströmenden Mediums erfasst werden. Vorteilhaft wird dabei eine Strömung mit ansteigender oder abfallender Geschwindigkeit erzeugt, um die Strömungsgeschwindigkeit zu ermitteln, bei welcher erstmals Wirbel oder gerade noch Wirbel entstehen. Durch die ansteigende oder abfallende Geschwindigkeit der Strömung wird dieser Punkt, an welchem erstmals Wirbel entstehen (bei ansteigender Strömungsgeschwindigkeit) oder bei dem gerade noch Wirbel entstehen (bei abfallender Strömungsgeschwindigkeit) ermittelt.

Zweckmäßigerweise erfolgt die Bestimmung dieser Geschwindigkeit, bei welcher erstmals Wirbel entstehen oder gerade noch Wirbel entstehen mittels einer Messeinrichtung, welche die Frequenz der sich im Kanal in Abströmrichtung hinter dem Körper bildenden Wirbel erfasst und darüber die Strömungsgeschwindigkeit bestimmt. Eine solche Frequenzerfassung kann über einen dort angeordneten Drucksensor erfolgen, vorteilhaft erfolgt die Frequenzerfassung jedoch mittels eines im Wirbelbereich angeordneten Differenzdrucksensors, wie er typischerweise in Rohrleitungen oder Pumpen eingesetzt wird. Derartige Differenzdrucksensoren sind heutzutage kostengünstig und langzeitstabil verfügbar.

Vorteilhaft erfolgt neben der Erfassung der Frequenz zusätzlich auch eine Temperaturerfassung der durchströmenden Flüssigkeit, welche bei der Bestimmung der Viskosität Berücksichtigung findet. Zwar kann es je nach Anwendung genügen, die Viskosität anhand der Strömungsgeschwindigkeit zu bestimmen, bei welcher sich erstmals Wirbel bilden oder gerade noch Wirbel entstehen, doch wird insbesondere dann, wenn die durchströmende Flüssigkeit wechselnde Temperatur aufweist oder eine höhere Genauigkeit erforderlich ist, die Einbeziehung der Temperatur des durchströmenden Mediums vorteilhaft sein.

Wenn die Flüssigkeit zum Beispiel aus Wasser und Glykol besteht, wie dies bei Wärmeträgerflüssigkeiten häufig der Fall ist, zum Beispiel im Kraftfahrzeug, in Sonnenkollektoren oder dergleichen, dann kann gemäß einer vorteilhaften Weiterbildung der Erfindung anhand der Viskosität der Flüssigkeit gegebenenfalls unter Berücksichtigung ihrer Temperatur der Glykolgehalt des Wassers und/oder der Gefrierpunkt der Flüssigkeit bestimmt werden. Es kann dann also mit einem üblichen Vortex-Durchflussmesser in einfacher Weise schnell und ohne Eingriff in das System bestimmt werden, ob der Frostschutz genügt oder nicht. Glykol ist hier nur beispielhaft für eine Vielzahl mit Wasser oder anderen Flüssigkeiten mischbaren Stoffen aufgeführt.

Wenn, was bei Wärmetauscheranlagen in der Regel der Fall ist, der Kanal durch eine von einer Kreiselpumpe beaufschlagte Leitung gebildet wird, kann diese vorteilhaft zur Bestimmung der Viskosität mit ansteigender oder abfallender Drehzahl angesteuert werden, was insbesondere bei modernen drehzahlveränderbaren Kreiselpumpen ohne größeren technischen Aufwand möglich ist.

Wenn eine solche Ansteuerung der Pumpe aus welchen Gründen auch immer nicht möglich ist, dann können gemäß einer alternativen Ausbildung des erfindungsgemäßen Verfahrens Mittel zum Drosseln bzw. Öffnen des Leitungsquerschnitts vorgesehen sein um damit die Strömungsgeschwindigkeit zu ermitteln, bei der erstmals Wirbel oder gerade noch Wirbel entstehen und somit die Viskosität zu erfassen. Der Kanal kann dann durch eine von einer beliebigen Druckquelle beaufschlagte Leitung gebildet sein, sei es von einem Druckspeicher oder auch einer Kreiselpumpe, die nicht drehzahlsteuerbar ist oder deren Steuerung sich für das vorstehend beschriebene Verfahren nicht eignet.

Durchgeführt werden kann das erfindungsgemäße Verfahren mit einer entsprechenden Vorrichtung, deren Bauteile großteils in bekannten Anlagen bereits vorhanden sind. So ist eine zum Eingliedern in eine Leitung vorgesehene Messanordnung mit einem Körper und einem mit Abstand dazu angeordneten Differenzdruckmesser häufig schon pumpenseitig integriert oder durch ein entsprechendes in die Leitung eingegliedertes Messmodul zur Ermittlung der Strömungsgeschwindigkeit vorhanden. Derartige Vortex-Messanordnungen mit einer Obstruktion und einer mit Abstand dazu in Abströmrichtung angeordneten Druckmesser oder Differenzdruckmesser zählen zum Stand der Technik. Zum Verändern der Strömungsgeschwindigkeit in der Leitung, was typischerweise mittels einer entsprechend steuerbaren Ventilanordnung oder einer drehzahlsteuerbaren Pumpe erfolgen kann, ist typischerweise eine elektronische Steuereinrichtung erforderlich, die beispielsweise durch einen Mikroprozessor gebildet sein kann, welchem eine solche Steuerfunktion softwaremäßig implementiert ist. Weiterhin ist eine elektronische Auswerteinrichtung zum Auswerten des Druck- oder Differenzdrucksignals zur Bestimmung der Strömungsgeschwindigkeit und somit der Viskosität der Flüssigkeit in der Leitung erforderlich, auch dies kann auf einfache Weise softwaremäßig implementiert in einem Mikroprozessor erfolgen. Die erfindungsgemäße Vorrichtung kann daher in der Regel mit ohnehin vorhandenen oder kostengünstig bereitzustellenden Bauteilen aufgebaut werden.

Dabei weist die Messanordnung vorteilhaft auch einen Temperatursensor auf, um die Genauigkeit der Viskositätsbestimmung zu erhöhen. Derartige Temperatursensoren sind in modernen Differenzdrucksensoren regelmäßig verbaut, zumindest zählen sie bei Vortex-Messeinrichtung zum praktizierten Stand der Technik.

Wenn, was vorteilhaft ist, zur Veränderung der Strömungsgeschwindigkeit eine drehzahlsteuerbare Kreiselpumpe eingesetzt wird, dann ist es besonders vorteilhaft, wenn die Messanordnung Teil der Kreiselpumpe bildet. Dann ist es weiter besonders vorteilhaft, wenn zumindest ein Teil oder vorteilhaft die gesamte Steuer- und Auswertelektronik im Klemmkasten oder Elektronikgehäuses des Motors der Kreiselpumpe angeordnet ist, da dann die gesamte Vorrichtung in dem Pumpenaggregat integriert sein kann, so dass die Vorrichtung praktisch ohne zusätzliche Baumaßnahmen in eine vorhandene Anlage durch Einbau eines entsprechenden Pumpenaggregats integriert werden kann.

Wenn zur Steuerung der Strömungsgeschwindigkeit ein steuerbares Drosselventil Verwendung findet, kann die Messanordnung vorteilhaft innerhalb der Ventilanordnung vorgesehen sein, ebenso wie die Steuerund Auswerteinrichtung, so dass sich auch bei dieser Baualternative eine kompakte ohne zusätzliche technische Maßnahmen handhabbare Baueinheit ergibt.

Die Erfindung ist nachfolgend anhand eines in der Zeichnung dargestellten Ausführungsbeispiels näher erläutert. Es zeigen:
- Fig. 1: ein Kreiselpumpenaggregat mit integrierter Vorrichtung zur Visko- sitätserfassung in stark vereinfachter Darstellung in Ansicht auf die Stirnseite des Motors,
- Fig. 2: eine Seitenansicht auf das Kreiselpumpenaggregat gemäß Fig. 1,
- Fig. 3: in stark vergrößerter schematischer Schnittdarstellung einen Lei- tungsabschnitt mit Vortex-Messeinrichtung und
- Fig. 4: ein Diagramm, welches die Strömungsgeschwindigkeit, bei wel- cher sich gerade noch Wirbel bilden, in Abhängigkeit des Gly- kolgehaltes in Wasser bei drei unterschiedlichen Temperaturen darstellt.

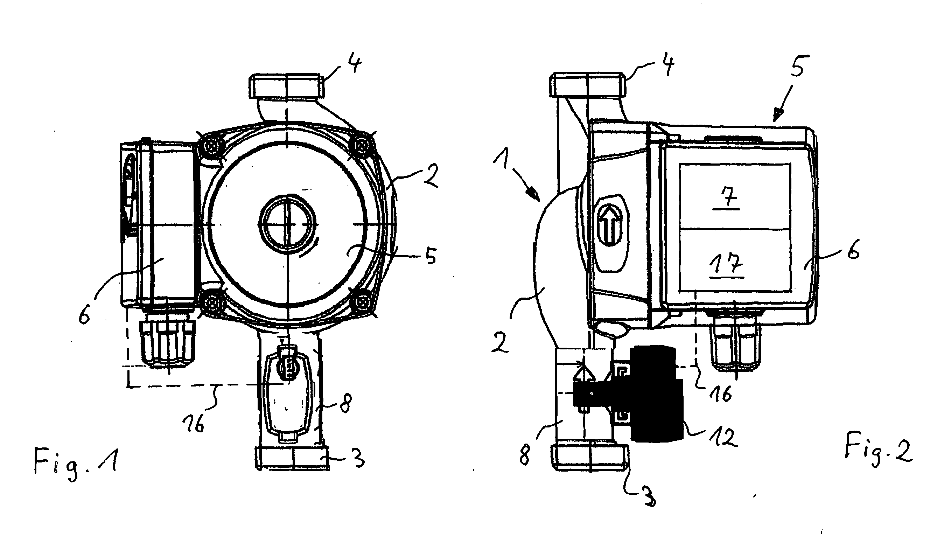

Das in den Figuren 1 und 2 dargestellte Kreiselpumpenaggregat weist eine Inline-Kreiselpumpe 1 auf, deren Pumpengehäuse 2 einen zum

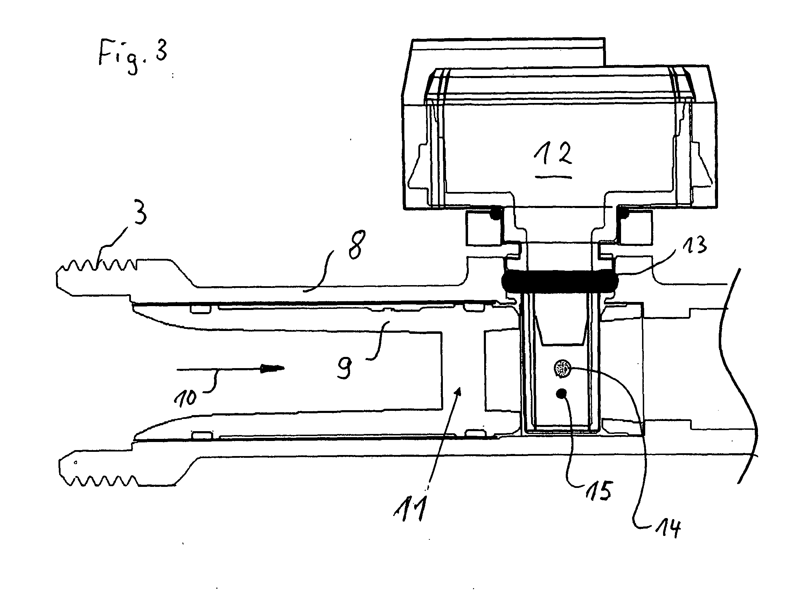

Saugmund der Pumpe führenden saugseitigen Anschluss 3 sowie einen achsgleichen dazu angeordneten druckseitigen Anschluss 4 hat. Angetrieben wird die Kreiselpumpe 1 durch einen Elektromotor 5, der einen seitlich am Motorgehäuse angeordneten Klemmen- und Elektronikkasten 6, aufweist in welchem ein Frequenzumrichter angeordnet ist, mit dem die Motordrehzahl gesteuert werden kann. Eine entsprechende Steuerung 7 ist in Form einer digitalen Steuerelektronik im Klemmenkasten 6 angeordnet. In der an den Saustutzen 3 anschießenden pumpenseitigen Saugleitung 8 ist eine Vortex-Messeinrichtung angeordnet, deren Aufbau im Einzelnen anhand Fig. 3 dargestellt ist.

In die Saugleitung 8 ist eine Hülse 9 eingesetzt, welche einen quer zur Strömungsrichtung 10 angeordneten Körper 11 aufweist, der für die Durchströmung ein Hindernis bildet. Der Körper 11 ist so angeordnet und ausgebildet, dass sich beim Anströmen in Strömungsrichtung 10 dahinter gegenläufige Wirbel ausbilden, eine so genannte Kärmänsche Wirbelstraße. Zur Erfassung dieser Wirbel ist in Strömungsrichtung 10 mit Abstand hinter dem Körper 11 ein Sensorkörper 12 eingesetzt, der mittels eines O-Rings 13 abgedichtet in einer Ausnehmung der Saugleitung 8 und einer fluchtend dahinter in der Hülse 9 befindlichen Durchbrechung formschlüssig gehalten ist. Der Sensorkörper 12 ist als einheitlich handhabbares Bauteil ausgebildet und umfasst in seinem umströmten Bereich einen Differenzdrucksensor 14, mit dem die Frequenz der sich hinter dem Körper 11 ausbildenden Wirbel erfassbar ist sowie einen Temperatursensor 15 zur Erfassung der Temperatur der durchströmenden Flüssigkeit. Die im Sensorkörper 12 angeordneten Sensoren 14 und 15 sind über eine Datenleitung 16 mit der Auswertelektronik 17 im Klemmen- und Elektronikkasten 6 des Motors verbunden.

Die anhand der Fig. 3 dargestellte Messanordnung in der Saugleitung 8 kann alternativ auch in einem beliebigen Leitungsabschnitt angeordnet sein, ebenso wie die Auswertelektronik 17 sowie auch Teile der Steuerelektronik 7 nicht Teil des Pumpenaggregats bilden müssen.

Die vorstehend beschriebene Einrichtung arbeitet im Betrieb wie folgt: Die über die Saugleitung 8 in die Kreiselpumpe 1 einströmende Flüssigkeit wird am Körper 11 bei ausreichender Strömungsgeschwindigkeit zu einer Wirbelbildung angeregt, die mittels des mit Abstand dahinter angeordneten Differenzdrucksensors 14 erfasst und unter Berücksichtigung des mittels des Temperatursensors 15 ermittelten Temperatur der Auswertelektronik 17 zugeführt wird, welche anhand dieser Daten die Strömungsgeschwindigkeit ermittelt, wie dies bei solchen Vortex-Messanordnungen an sich zum Stand der Technik zählt.

Mittels der Steuerelektronik 7 wird der Elektromotor 5 der Kreiselpumpe 1 gegebenenfalls selbsttätig in bestimmten Abständen oder bei Erhalt eines entsprechenden Steuerbefehls mit von Null oder einer geringen Geschwindigkeit ansteigender Drehzahl angesteuert. Dabei wird in der Auswertelektronik 17 neben der Temperatur 15 insbesondere das Signal des Differenzdrucksensors 14 überwacht. Sobald dieser Sensor ein Frequenzsignal erzeugt, wird dieses in der Auswertelektronik 17 erfasst. Diese ermittelte unterste Frequenzsignal stellt sich ein, wenn sich hinter dem Körper 11 erstmals Verwirbelungen bilden, die vom Sensor 14 erfassbar sind. Da die Geschwindigkeit, bei welcher sich diese Wirbel erstmals bilden abhängig von der Viskosität der Flüssigkeit sowie im Weiteren auch von der Temperatur der Flüssigkeit ist, kann in der Auswertelektronik 17 durch Vergleich mit vorab gespeicherten Werten die Viskosität der geförderten Flüssigkeit ermittelt werden.

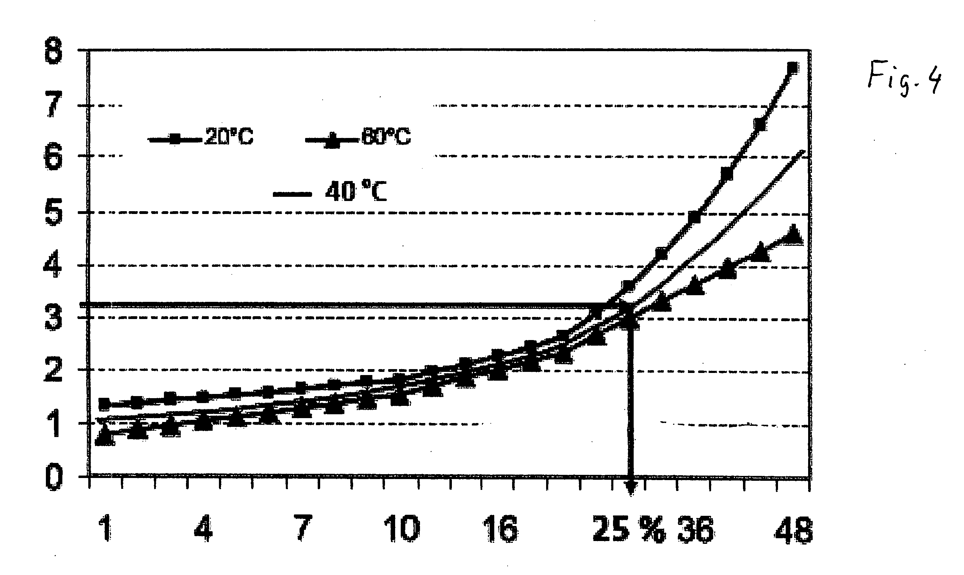

Anhand von Fig. 4 ist dargestellt, wie sich diese erstmalige Wirbelbildung in Strömungsrichtung 10 hinter dem Körper 11 in Abhängigkeit der Temperatur sowie der Viskosität der Flüssigkeit einstellt. Die Darstellung gemäß Fig. 4 geht jedoch insoweit einen Schritt weiter, da sie nicht direkt die Viskosität angibt, sondern den prozentualen Glykolgehalt einer auf Wasser basierten Flüssigkeit. Es ist somit bei Hinterlegung der aus dem Diagramm gemäß Fig. 4 bekannten Anfangswerte in Abhängigkeit der Temperatur mittels der Auswertelektronik 17 möglich, durch die vorbeschriebene Messung direkt den Glykolgehalt des Wassers und damit zum Beispiel den Gefrierpunkt zu ermitteln.

Der als solche bekannte Sensorkörper 12 ist somit durch die Steuerelektronik 7 und die Auswertelektronik 17 einer weiteren Funktion zugeführt worden, nämlich der Viskositätsbestimmung des geförderten Mediums bzw. der Bestimmung des Glykolgehalts des Mediums bzw. des Gefrierpunktes des durchströmten Mediums, je nach dem welche der vorgenannten Größen genutzt werden sollen. Ungeachtet dessen können mit dem Sensorkörper 12 weiterhin die Geschwindigkeit und die Temperatur des Mediums erfasst werden.

Alternativ oder zusätzlich kann mittels der Steuerelektronik 7 der Motor 5 nicht nur mit von Null ansteigender Drehzahl sondern auch mit bis auf Null oder soweit abfallender Drehzahl angesteuert werden, dass die vorbeschriebene Wirbelbildung gerade nicht mehr erfolgt um die für die Viskositätsbestimmung erforderliche minimale Strömungsgeschwindigkeit zu bestimmen, bei der gerade noch Wirbel hinter dem Körper 11 entstehen.

### Bezugszeichenliste

- 1: - Kreiselpumpe
- 2: - Pumpengehäuse
- 3: - saugseitiger Anschluss
- 4: - druckseitiger Anschluss
- 5: - Elektromotor
- 6: - Klemmen- und Elektronikkasten
- 7: - Steuerelektronik
- 8: - Saugleitung
- 9: - Hülse
- 10: - Strömungsrichtung
- 11: - Körper
- 12: - Sensorkörper
- 13: - O-Ring
- 14: - Differenzdrucksensor
- 15: - Temperatursensor
- 16: - Datenleitung
- 17: - Auswertelektronik

## Patentansprüche

1. Verfahren zur Ermittlung der Viskosität einer Flüssigkeit, **dadurch gekennzeichnet, dass** in einem flüssigkeitsführenden Kanal (8) ein in den Kanal ragender und beim Anströmen Wirbel erzeugender Körper (11) angeordnet wird, dass mindestens ein sich in Strömungsrichtung hinter dem Körper bildender Wirbel messtechnisch erfasst wird, dass bei dem die Strömungsgeschwindigkeit in dem Kanal ermittelt wird, bei welcher erstmals Wirbel oder gerade noch Wirbel entstehen und dass diese Geschwindigkeit als Maß für die Viskosität der durchströmenden Flüssigkeit herangezogen wird.

2. Verfahren nach Anspruch 1, **dadurch gekennzeichnet, dass** eine Strömung mit ansteigender oder abfallender Geschwindigkeit erzeugt wird, um die Strömungsgeschwindigkeit zu ermitteln, bei welcher erstmals Wirbel oder gerade noch Wirbel entstehen.

3. Verfahren nach einem der vorhergehenden Ansprüche, **dadurch gekennzeichnet, dass** die Frequenz der sich beim Durchströmen des Kanals in Abströmrichtung hinter dem Körper bildenen Wirbel als Maß für die Strömungsgeschwindigkeit erfasst wird.

4. Verfahren nach einem der vorhergehenden Ansprüche, **dadurch gekennzeichnet, dass** die Erfassung der Frequenz mittels eines im Wirbelbereich angeordneten Differenzdrucksensors erfolgt.

5. Verfahren nach einem der vorhergehenden Ansprüche, **dadurch gekennzeichnet, dass** auch die Temperatur der durchströmenden Flüssigkeit gemessen und bei der Bestimmung der Viskosität berücksichtigt wird.

6. Verfahren nach einem der vorhergehenden Ansprüche, **dadurch gekennzeichnet, dass** die Flüssigkeit aus Wasser und einen weiteren Stoff, vorzugsweise Glykol besteht und anhand der Viskosität der Flüssigkeit ggf. unter Berücksichtigung ihrer Temperatur der Stoff- bzw. Glykolgehalt des Wassers und/oder der Gefrierpunkt der Flüssigkeit bestimmt wird.

7. Verfahren nach einem der vorhergehenden Ansprüche, **dadurch gekennzeichnet, dass** der Kanal durch eine von einer Kreiselpumpe beaufschlagte Leitung gebildet wird und die Kreiselpumpe zur Bestimmung der Viskosität mit ansteigender oder abfallender Drehzahl angesteuert wird.

8. Verfahren nach einem der vorhergehenden Ansprüche, **dadurch gekennzeichnet, dass** der Kanal durch eine von einer Druckquelle beaufschlagten Leitung gebildet wird und Mittel zum Drosseln bzw. Öffnen des Leitungsquerschnitts zum Bestimmen der Viskosität vorgesehen sind.

## Claims

1. A method for determining the viscosity of a fluid, **characterised in that** a body (11) is arranged in a fluid-leading channel (8), said body projecting into the channel and producing vortices given an onflow, that at least one vortex forming behind the body in the flow direction is detected with regard to measurement technology, with which the flow speed in the channel, at which vortices form for the first time or only just continue to exist, is determined, and that this speed is used as a measure for the viscosity of the through-flowing fluid.

2. A method according to claim 1, **characterised in that** a flow with an increasing or dropping speed is produced, in order to determine the flow speed, at which vortices arise for the first time or only just continue to exist.

3. A method according to one of the preceding claims, **characterised in that** the frequency of the vortices forming behind the body in the flow direction given a flow through the channel, is detected as a measure for the flow speed.

4. A method according to one of the preceding claims, **characterised in that** the detection of the frequency is effected by way of a differential pressure sensor arranged in the vortex region.

5. A method according to one of the preceding claims, **characterised in that** the temperature of the through-flowing fluid is also measured, and is taken into account on determining the viscosity.

6. A method according to one of the preceding claims, **characterised in that** the fluid consists of water and a further substance, preferably glycol, and the substance content or glycol content of the water and/or the freezing point of the fluid is determined by way of the viscosity of the fluid, as the case may be, whilst taking its temperature into account.

7. A method according to one of the preceding claims, **characterised in that** the channel is formed by a conduit which is affected by a centrifugal pump, and the centrifugal pump is activated with an increasing or dropping rotational speed for determining the viscosity.

8. A method according to one of the preceding claims, **characterised in that** the channel is formed by a conduit which is affected by a pressure source, and means for throttling or opening the conduit cross section are provided for determining the viscosity.

## Revendications

1. Procédé de détermination de la viscosité d'un fluide, **caractérisé en ce qu'**est disposé, dans un canal (8) d'amenée de fluide, un corps (11) émergeant dans le canal et générant des tourbillons lors de l'afflux de fluide, **en ce qu'**au moins un tourbillon se formant derrière le corps dans la direction d'écoulement est détecté par mesure, **en ce qu'**est déterminée dans le canal la vitesse d'écoulement à laquelle des tourbillons se forment pour la première fois ou à laquelle des tourbillons sont encore tout juste générés et **en ce que** cette vitesse est utilisée comme valeur de mesure de la viscosité du fluide en circulation.

2. Procédé selon la revendication 1, **caractérisé en ce qu'**un écoulement à vitesse croissante ou décroissante est généré pour déterminer la vitesse d'écoulement à laquelle des tourbillons se forment pour la première fois ou à laquelle des tourbillons sont encore tout juste générés.

3. Procédé selon l'une des revendications précédentes, **caractérisé en ce que** la fréquence des tourbillons se formant derrière le corps lors de l'écoulement à travers le canal dans la direction aval est détectée en tant que valeur de mesure de la vitesse d'écoulement.

4. Procédé selon l'une des revendications précédentes, **caractérisé en ce que** la détection de la fréquence est opérée au moyen d'un capteur de pression différentielle disposé dans la zone tourbillonnaire.

5. Procédé selon l'une des revendications précédentes, **caractérisé en ce que** la température du fluide en circulation est également mesurée et prise en compte lors de la détermination de la viscosité.

6. Procédé selon l'une des revendications précédentes, **caractérisé en ce que** le fluide est constitué d'eau et d'une autre substance, de préférence du glycol et **en ce qu'**à partir de la viscosité du fluide, en tenant compte, le cas échéant, de sa température, on détermine la teneur en substance ou en glycol de l'eau et/ou le point de congélation du fluide.

7. Procédé selon l'une des revendications précédentes, **caractérisé en ce que** le canal est formé par un conduit alimenté par une pompe centrifuge et **en ce que**, pour déterminer la viscosité, la pompe centrifuge est pilotée à une vitesse croissante ou décroissante.

8. Procédé selon l'une des revendications précédentes, **caractérisé en ce que** le canal est formé par un conduit alimenté par une source de pression et **en ce que** sont prévus des moyens d'étranglement ou d'ouverture de la section transversale du conduit pour déterminer la viscosité.
